# EUROPEAN PATENT APPLICATION

(11) **EP 1 806 826 A2**
(43) Date of publication of application: **11.07.2007**
(21) Application number: 07100131.7
(22) Date of filing: 04.01.2007
(51) Int. Cl.: H02K 15/03

(54) **System and method for assembly of an electromagentic machine**

(30) Priority: 10.01.2006 US 328843
(71) Applicant: General Electric Company, Schenectady, NY 12345 (US)
(72) Inventor: Li, Liang, Clifton Park, NY 12065 (US); Yu, Hai, 201203, Shanghai (CN); Wang, Jianmin James, Shanghai (CN); Dong, Shengzhi, 200233, Shanghai (CN); Jansen, Patrick Lee, Scotia, NY 12302 (US); Carl, JR., Ralph James, Clifton Park, NY 12065 (US)
(74) Representative: Bedford, Grant Richard

(57) **Abstract**

A magnetizing system includes a guide channel (56) that is configured to receive a ferromagnetic element (32). A magnetic field source (48) of the system is operable to magnetize the ferromagnetic element (32). An actuation mechanism (46) drives the ferromagnetic element through the guide channel. Because a positioning mechanism of the system has aligned the guide channel with a slot of an electromagnetic machine component, the ferromagnetic element is routed through the channel and into the slot.

## Description

This section is intended to introduce the reader to various aspects of art that may be related to aspects of the present invention, which are described and/or claimed below. This discussion is believed to be helpful in providing the reader with background information to facilitate a better understanding of the various aspects of the present invention. Accordingly, it should be understood that these statements are to be read in this light, and not as admissions of prior art.

In industry, electromagnetic machines are often employed to generate power or to drive machine elements. For example, generators are designed to translate harnessed kinetic energy into electrical power, while electrical motors take advantage of electromagnetic relationships to translate electrical power into motion. As one particular application, generators can be found in wind turbine structures, which harness wind energy into electrical power. Advantageously, wind turbines produce electrical power in a virtually pollution-free manner, making them ecologically desirable.

Such generators traditionally include a freely rotating rotor that is surrounded by a stationary stator. In the case of wind turbines, the fans blades are mechanically coupled to the rotor. Thus, induced rotation of the blades of the wind turbine by wind causes rotation of the rotor as well. Because the rotor is appropriately magnetized (i.e., provides magnetic fields of varying polarity), rotating magnetic fields are provided by the rotation of the rotor. In turn, the rotating magnetic fields induce an electrical current in stator windings of the stator assembly, the current then being harnessed for downstream use.

In wind turbines, particularly utility class wind turbines, the generators employed can have relatively large diameters, four to five meters, for instance. Moreover, to more efficiently generate high-Gauss electromagnetic fields, rotors having magnetic poles formed of what are commonly known as "rare earth magnets," e.g., Neodymium-Iron-Boron (NdFeB) and Samarium Cobalt (SmCo), are employed. Advantageously, these rare earth magnets have a high-energy product, forty megaGauss Oersted (GOe), for instance. However, a rare earth magnet must be magnetized-by placing the rare earth magnet in a strong magnetizing-and assembled onto the rotor.

Unfortunately, magnetizing and assembling a magnet pole formed of such rare earth magnets with respect to a rotor can be a relatively difficult task. For example, if the magnet pole is magnetized prior to assembly onto the rotor, the operator may find it unwieldy to manage, because the magnetic field of the pole would interact with various other ferromagnetic structures on the electrical machine and even other magnet poles, for instance. Moreover, even after the magnet pole is mounted with respect to the rotor, difficulties may arise in assembling the magnetized rotor with respect to the stator and the remainder of the generator structure. As an alternative, past assembly techniques have included magnetization of the magnet pole after it has been assembled onto the rotor, and, in certain cases, after the rotor has been assembled with respect to the remainder of the generator. Unfortunately, the systems employed for such *in situ* magnetization are relatively large and bulky, increasing the costs and times for assembly.

Therefore, there exists the need for improved systems and methods for electromagnetic machine assembly.

Certain aspects commensurate in scope with the originally claimed invention are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

In accordance with certain embodiments, the present invention provides a magnetizing system. This system includes a guide channel that is configured to receive a magnet pole. When in this channel, a magnetic field source of the system is operable to magnetize the ferromagnetic element. Also, the exemplary system includes an actuation mechanism that drives the ferromagnetic element through the guide channel. Because a positioning mechanism of the system has aligned the guide channel with a slot of an electromagnetic machine component, the ferromagnetic element is routed through the channel and into the slot.

Various features, aspects, and advantages of the present invention will become better understood when the following detailed description is read with reference to the accompanying drawings in which like characters represent like parts throughout the drawings, wherein:
FIG. 1 is a diagrammatic representation of a wind turbine generator system, in accordance with certain aspects of the present invention;
FIG. 2 is a diagrammatic, cross-sectional view of a generator, in accordance with certain aspects of the present invention;
FIG. 3 is a diagrammatic representation of a system for assembly of an electromagnetic machine, in accordance with certain aspects of the present invention;
FIG. 4 is an illustration of a magnetizing device, in accordance with certain aspects of the present invention;
FIGS. 5, 6, and 7 are, respectively, illustrations of a magnetizing device during various stages of operation, in accordance with various aspect of the present invention; and
FIG. 8 is a flow chart representative of a method for assembly of an electromagnetic machine, in accordance with certain aspects of the present invention.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliant with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

As discussed in detail below, the present invention, in accordance with certain embodiments, provides apparatus and methods for the assembly of electromagnetic machines. For example, the following discussion describes magnetizing systems and methods that facilitate concurrent magnetization and insertion of a magnet pole into a rotor of a permanent magnet generator. However, despite the fact that the following discussion focuses on generator assemblies, particularly permanent magnet rotors of such generators, the present invention may be applicable to a vast number of electromagnetic machines in which the assembly of magnetic components is a concern, including motor assemblies, and the like.

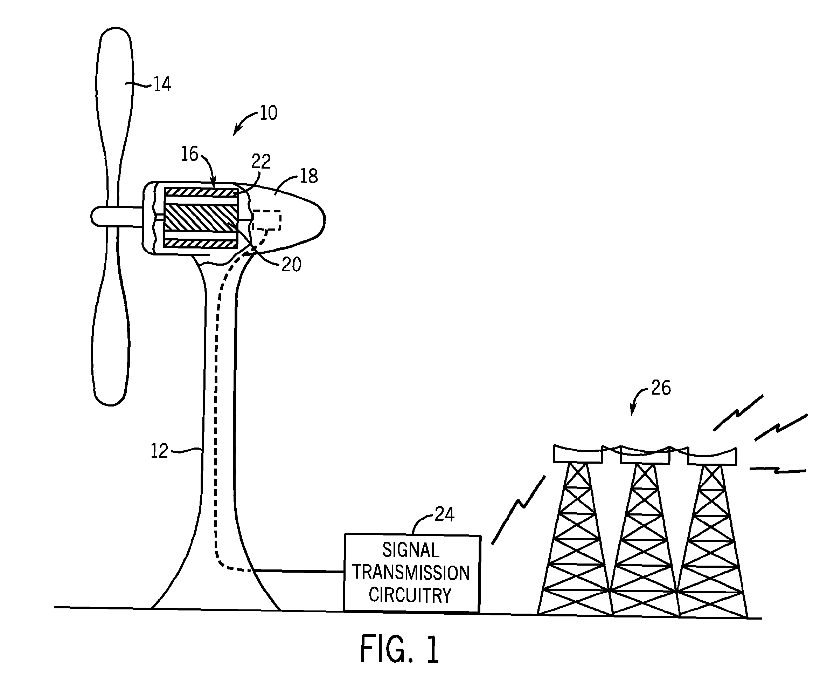

Turning to the figures, FIG. 1 illustrates a wind turbine power generation system 10, in accordance with certain aspects of the present invention. The system 10 includes a wind turbine 12, which is part of a larger wind farm. The wind turbine 12 has a plurality of blades 14 that harness wind energy into rotational motion of the blades 14. This rotation is mechanically transferred to a generator 16 disposed in the nacelle 18 of the wind turbine 12. As will be appreciated by those of ordinary skill in the art, the generator 16 has a permanent magnet rotor 20 surrounded by a stator 22, and the electromagnetic relationship between the rotor 20 and the stator 22 generates electrical current in the stator 22 due to rotation of the rotor 20. This electrical current is routed to signal transmission circuitry 24, at which point it is conditioned and forwarded to a power grid 26 for distribution.

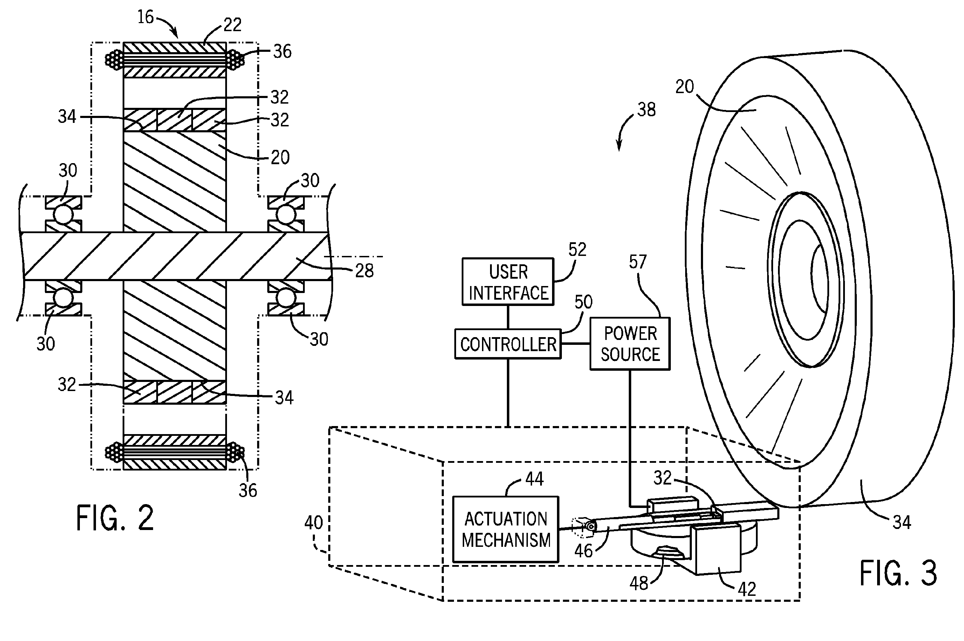

FIG. 2 is a cross-sectional illustration of an exemplary generator 16, which, for the purposes of this discussion, has been simplified and does not illustrate various components that are commonly appreciated by those of ordinary skill in the art. As illustrated, a shaft 28 extends through the rotor 20 and is supported by a plurality of bearings assemblies 30. Via the bearing assemblies 30, the rotor 20 is free to rotate with respect to the stationary stator 22. Advantageously, as will be appreciated by those of ordinary skill in the art, "permanently magnetized" magnet poles 32 mounted on the surface 34 of the rotor 20 facilitate translation of the rotor's 20 rotation into an induced voltage in the stator windings 36 of the stator 22. This configuration is commonly referred to as a surface-mounted permanent magnet rotor. Aspects of this invention also pertain to electric machines wherein the permanent magnet poles 32 are mounted in the interior of the rotor. Thus, "surface," as usual herein, applies to both externally located surfaces as well as interior surfaces.

The angular location of the magnet pole 32 on the rotor 20 determines the pole's 32 polarity. Thus, because of the variances in polarity, different magnetic fields are present. In turn, the rotation of the rotor 20, which carries the magnet poles 32, produces a changing magnetic field that, as is well known, induces electrical voltage in the stator windings 36.

To effectuate the production of good levels of electrical power, the exemplary magnetic poles 32 comprise rare earth magnet materials, such as Neodymium-Iron-Boron (NdFeB) and/or Samarium Cobalt (SmCo). However, it is worth noting that the magnet poles 32 may be formed of any number of hard ferromagnetic materials. Additionally, these exemplary magnet poles 32 can comprise a single piece that is mounted on the rotor surface 34, or may be segmented as is illustrated. Advantageously, segmented poles 32 simplify installation, because they are smaller and less difficult to manage in comparison to single pole pieces. Moreover, segmented poles are more resistant to "cracking" during a generator's life, for instance.

FIG. 3 illustrates an assembly mechanism 38 for magnetizing and inserting magnet poles 32 into a rotor assembly. Although described in relation to a rotor, it is worth noting that the present assembly mechanism 38 affords benefits to any number scenarios related to the assembly and magnetization of magnetic components of electromagnetic machines. As discussed in detail below, the assembly mechanism 38 facilitates temporal proximity between the magnetization of the magnet pole 32 and the installation of the magnet pole 32 on to the appropriate location on the rotor surface 34 of the rotor 20. Advantageously, the exemplary assembly mechanism 38 simplifies the assembly process and facilitates *in situ* installation, as also further discussed below.

The assembly mechanism 38 includes a positioning structure 40 that aligns the assembly mechanism 38 with the appropriate rotor surface location 34 of the rotor 20. This positioning can be effectuated by the movement of the rotor 20 with respect to the assembly mechanism 38, movement of the assembly mechanism 38 with respect to the rotor 20, or any combination thereof with respect to one answer. Thus, the positioning structure can include components that position the rotor 20, the assembly mechanism 38, or any combination thereof. Once appropriately positioned, as discussed in detail below, an unmagntized pole 32 is placed into the body or chassis of a magnetizing device 42. Specifically, this device 42 both guides the magnet pole 32 onto the rotor surface location 34 and, relatively concurrently, magnetizes the pole 32. To insert the magnet pole 32 onto the rotor surface location 34, the assembly mechanism 38 includes an actuation mechanism 44, which can include hydraulic device 46, for instance. Additionally, the magnetizing device 42 includes a magnetic field source, such as a coil 48. Advantageously, the positioning structure 40, the actuation mechanism 44, the magnetizing coil 48, among other components, are under the direction of a controller 50. By way of example, the controller 50 may be a programmable logic circuit (PLC), a processor, among other kinds of devices. Communications with the controller 50, and the exemplary assembly mechanism 38 as a whole, are effectuated by a user interface 52, which allows a user to provide inputs to and receive information regarding the assembly mechanism 38 and the assembly process.

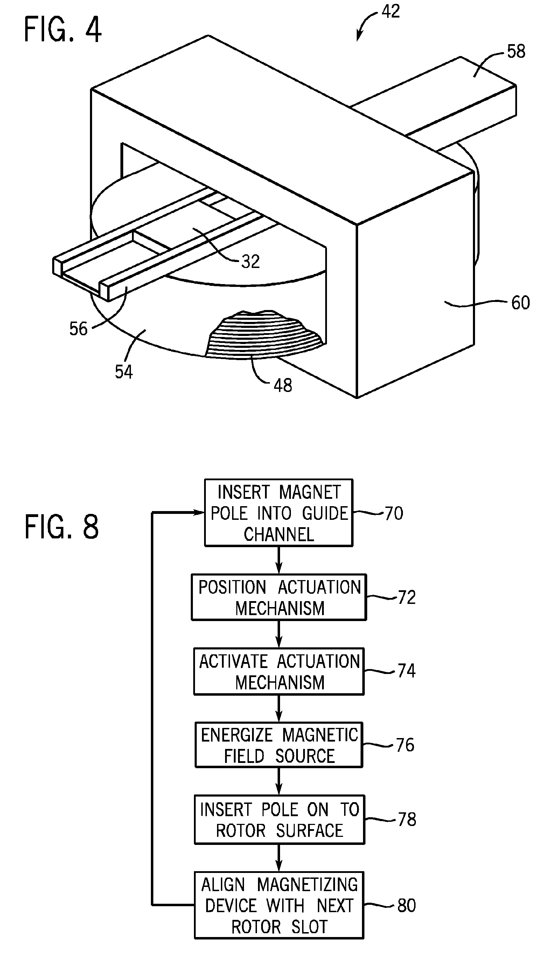

FIG. 4 focuses on an exemplary magnetizing device 42. This device 42 includes an oval-shaped body 54-which includes a magnetizing coil and carries a pole piece - that has a guide channel 56 coupled thereto. Although illustrated as a separate piece, it is worth noting that the guide channel 56 may be integral with respect to the body 54. The guide channel 56 is designed to receive a magnetic pole 32 and guide the pole 32 as it is driven toward the rotor surface location

Accordingly, the guide channel 56 matches closely the dimensioning of the magnet pole 32. In fact, the guide channel 56 can include an adjustment mechanism that allows expansion or retraction of the guide channel 56 to best match the width of the given magnet pole 32. Advantageously, the exemplary guide channel 56 includes a tray 58, disposed at the exit end of the guide channel 56, that well facilitates transition of the magnet pole 32 onto the rotor surface location 34, because it extends beyond the body 54, as one reason. Furthermore, to assist movement of the pole 32 through the guide channel 56, the channel 56 may include moving features, such as rollers, a conveyor system, protruding tracks to minimize contact area, and hence friction, between the pole and the channel, or a carrier mounted on telescoping rails, for example.

The guide channel may be made from a ferromagnetic material such as iron. In particular the guide channel may have top and bottom plates that are made out of ferromagnetic material. The guide channel, therefore, acts as a keeper of the magnetic flux as the magnet is transferred from the magnetizing fixture to the rotor surface location. Because the magnet is in a keeper, the net force acting on it is small independent of structures, particularly the iron and hard magnetic material structures external to the channel. The magnet pole 32 can be guided into its final position on the rotor surface 34 with a minimum of force, and reducing the likelihood of the magnet accelerating as is enters the rotor surface.

As discussed above, the exemplary magnetizing device 42 includes a magnetic field source, such as the coil winding 48, that operates to magnetize the magnet pole 32 after it is positioned in the proper position in the channel 56. The illustrated coil winding 48 can receive power from power source 57. As will be appreciated by those of ordinary skill in the art, placing this magnetic field source 48 in proximity to the guide channel 56 facilitates magnetization of the magnet pole 32, and subsequent handling of the magnetized pole 32. And this magnetic field source may be placed at a number of locations with respect to the remainder of the device 42, whether in the body 54 or in a mounting structure 60 that surrounds the body 54, for example.

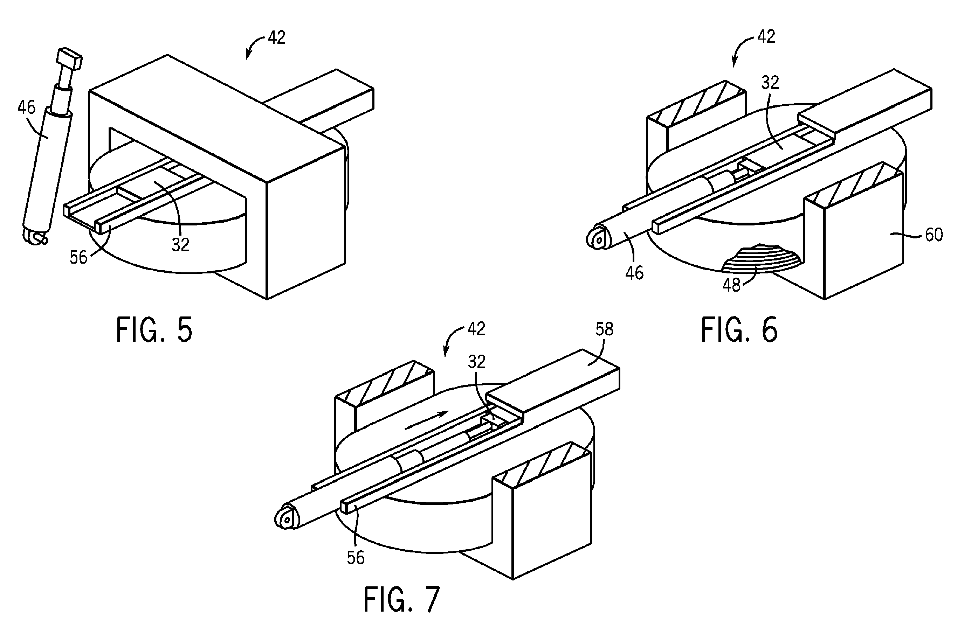

Turning to FIGS. 5, 6, and 7, these figures respectively illustrate the magnetizing device 42 during various stages of the installation of the magnet pole 32. Also, the following discussion refers to FIG. 8, which is a flow chart of an exemplary method in accordance with the present technique. Beginning with FIG. 5, the magnetizing device 42 is illustrated at an initial stage. In this stage, the magnet pole 32, which is not substantially magnetized, is placed into the input end of the guide channel 56. This step is represented by block 70 of FIG. 8. Advantageously, the fact that the magnet pole 32 is not substantially magnetized at this point makes the pole 32 easier to manage, because its does not have a substantial magnetic field that interacts with other components of the generator 16. Moreover, in this stage, the actuation mechanism, in this case the hydraulic arm 46, is in a retracted position with respect to the guide channel 56.

FIG. 6 illustrates the magnetizing device 42 at an intermediate stage. (Portions of the mounting structure 60 have been deleted for clarity of discussion.) In this stage, the hydraulic arm 46 has been lowered into position with respect to the guide channel 56. The hydraulic arm 46 is then actuated, causing the magnet pole 32, which is captured in the guide channel 56, to traverse the guide channel 56. Advantageously, the guide channel 56 directs the magnet pole 32 toward the appropriate rotor surface location 34. These steps are represented by blocks 72 and 74 of FIG. 8. Also, during this stage, the magnetic field source (e.g., coil assembly 48) is energized, thus magnetizing the magnet pole 32. As discussed above, the angular location of the magnet pole 32 in the rotor 20 determines the polarity of the applied magnetic field and, in turn, the polarity of the magnet pole 32. This step is represented by block 76 of FIG. 8.

FIG. 7 illustrates the magnetizing device 42 at its final stage. In this stage, the magnet pole 32 is driven through the guide channel 56 and the tray 52, and into the appropriate rotor surface location 34. This step is represented by block 74 of FIG. 8. Once the pole 32 is inserted, the positioning structure 40 is aligned with the next rotor surface location 34 to be filled, and the above-described process is repeated until all of the magnet poles have been inserted. These steps are represented by blocks 78 and 80 of FIG. 8.

Advantageously, it is believed that the relative concurrency of the insertion and magnetization process facilitates a more simplified and cost effective installation in comparison to traditional techniques. In fact, it is believed that the present technique affords many benefits to *in situ* installation.

While the invention may be susceptible to various modifications and alternative forms, specific embodiments have been shown by way of example in the drawings and have been described in detail herein. However, it should be understood that the invention is not intended to be limited to the particular forms disclosed. Rather, the invention is to cover all modifications, equivalents, and alternatives falling within the spirit and scope of the invention as defined by the following appended claims.

### PARTS LIST

| | |
|---|---|
| 10 | Power generation system |
| 12 | Wind turbine |
| 14 | Blades |
| 16 | Generator |
| 18 | Nacelle |
| 20 | Rotor |
| 22 | Stator |
| 24 | Circuitry |
| 26 | Power grid |
| 28 | Shaft |
| 30 | Bearing assemblies |
| 32 | Magnet poles |
| 34 | Rotor surface |
| 36 | Stator windings |
| 38 | Assembly mechanism |
| 40 | Positioning structure |
| 42 | Device |
| 44 | Actuation mechanism |
| 46 | Hydraulic device |
| 48 | Coil |
| 50 | Controller |
| 52 | User interface |
| 54 | body |
| 56 | Guide channel |
| 58 | Tray |
| 57 | Power source |
| 60 | Mounting structure |
| 70 | Block |
| 72 | Block |
| 74 | Block |
| 76 | Block |

## Claims

1. A magnetizing system, comprising:
a body portion (54) having a guide channel (56) to receive a ferromagnetic element (32);
a magnetic field source (48) operable to magnetize the ferromagnetic element when disposed in the guide channel;
an actuation mechanism (46) operable to drive the ferromagnetic element through the guide channel; and
a positioning mechanism (40) operable to position the body portion at a plurality of locations (34) relative to a electromagnetic machine component (20) such that the ferromagnetic element is positionable onto the electromagnetic machine component from the guide channel.

2. The magnetizing system of claim 1, wherein the guide channel (56) is configured to receive a magnet pole (32) for a rotor assembly (20).

3. The magnetizing system of claim 1 or claim 2, wherein the guide channel (56) comprises a ferromagnetic material.

4. The magnetizing system of any preceding claim, comprising a power source (57), the power source being electrically coupled to the magnetic field source (48) and operable to provide opposite polarities of current.

5. The magnetizing system of any preceding claim, comprising a controller (50) configured to determine an appropriate polarity of current provided to the magnetic field source (48) based on the location of the body portion (54) with respect to the electromagnetic machine component (20).

6. The magnetizing system of any preceding claim, wherein the actuation mechanism (46) comprises a hydraulic or pneumatic member.

7. The magnetizing system of any preceding claim, wherein the guide channel (56) is adjustable in dimension to accommodate the ferromagnetic element (32).

8. The magnetizing system of any preceding claim, wherein the magnetic field source (48) is a pulse coil, a continuously energized superconducting coil or a permanent magnet.

9. A method of assembling a electromagnetic machine component, comprising:
providing an unmagnetized ferromagnetic component (32);
guiding the magnet pole (32) toward a surface (34) of the electromagnetic machine component (20); and
magnetizing the magnet pole (32) as the ferromagnetic component (32) is guided toward the surface.

10. The method as recited in claim 9, comprising providing a plurality of ferromagnetic components (32) and guiding the plurality of ferromagnetic components toward the surface (34).
